# EUROPEAN PATENT APPLICATION

(11) **EP 4 821 973 A1**
(43) Date of publication of application: **14.10.2026**
(21) Application number: 25169976.5
(22) Date of filing: 11.04.2025
(51) Int. Cl.: C08J 11/16, C08J 11/28

(54) **PROCESS FOR THE DEPOLYMERIZATION OF ORGANOPOLYSILOXANE**

(71) Applicant: Henkel AG & Co. KGaA, 40589 Düsseldorf (DE)
(72) Inventor: Geitner, Felix, 40822 Mettmann (DE); Schafhausen, Niklas, 40627 Düsseldorf (DE); Dunekake, Ralf, 40589 Düsseldorf (DE); Gutacker, Andrea, 40764 Langenfeld (DE); Salahudeen, Shamna, 18059 Rostock (DE); Fehrmann, Helena, 18059 Rostock (DE); Mejia, Esteban, 18059 Rostock (DE)

(57) **Abstract**

The present invention relates to a process for the depolymerization of at least one organopolysiloxane, wherein the at least one organopolysiloxane is depolymerized in the presence of
(a) at least one inorganic hydroxide;
(b) at least one ammonium salt and/or at least one phosphonium salt having a pH value of from 5.0 to 9.0; and
(c) at least one solvent.

## Description

The invention relates to a process for the depolymerization of organopolysiloxanes, preferably into cyclosiloxanes, which can be used for the preparation of new organopolysiloxanes.

Silicones are a widely used material owing to their unique thermal and mechanical stability as well as low toxicity. However, recycling of silicone waste is a big challenge nowadays, since reuse of generally cured silicones is mostly impossible. Depolymerization of silicone polymers into reusable building blocks would be an attractive option for effective recycling and valorization of siloxane polymer waste. For a circular economy, it would be important to bring back silicone waste into the production chain, at best through chemical recycling methods. Procedures for the chemical recycling of polysiloxanes would allow for recovery of small cyclic polysiloxanes, which could be used for *de-novo* synthesis of silicone materials. Unfortunately, the known methods are energetically inefficient, require high working temperatures, and the use of highly reactive depolymerization reagents.

The publication of P. Döhlert et al., Depolymerization protocol for linear, branched, and crosslinked end-of-life silicones with boron trifluoride diethyl etherate as the depolymerization reagent. (J. Appl. Polym. Sci., 2015, 132, 41287) recently reported silicone depolymerization using stoichiometric amounts of fluorinated depolymerization agents like boron trifluoride diethyl etherate, along with an iron or zinc salt to yield small fluorinated silanes and disiloxanes. Thus, one additional step would be needed to convert those into cyclic siloxanes. Besides the corrosive nature of the boron fluoride also the need for stoichiometric amounts of depolymerization agent causing high costs, render this procedure as not suitable for industrial scale applications.

In the publication of Rupasinghe et al., Full Circle Recycling of Polysiloxanes via Room-Temperature Fluoride-Catalyzed Depolymerization to Repolymerizable Cyclics (ACS Applied Polymer Materials, 2021, 3, 1828) silicones were depolymerized into cyclic siloxanes using tetrabutylammonium fluoride (TBAF), which is very toxic, hygroscopic, and corrosive, hampering its utilization in large scale. Additionally, the high cost for this reagent renders it unattractive for industrial applications.

The publication of Torgunrud et al., Entropy-Driven Depolymerization of Poly(dimethylsiloxane). (Macromolecules, 2023, 56, 3668) introduced entropy driven depolymerization of silicones using sub-stoichiometric inorganic bases (10% mol) and an alcohol (1 equivalent) to produce cyclic silicon acetals. The document also describes the use of tetrabutylammonium fluoride, which is not applicable in large scale processes as detailed above.

The publication of Vu et al., Back-to-cyclic monomers: chemical recycling of silicone waste using a [polydentate ligand-potassium silanolate] complex (Green Chemistry, 2023, 25, 3869) reports silicone depolymerization using a combination of a crown ether and potassium silanolate as nucleophile. The reaction was carried out at 140°C in vacuum. The reaction conditions are very harsh, and the catalyst used for the reactions are very expensive rendering the method both ecologically as well as economically unattractive.

It has been suggested using strongly basic ammonium salts such as tetrabutylammonium hydroxide in several documents, e.g., JP 2004107402 A. However, tetrabutylammonium hydroxide can degrade under certain conditions, particularly at high temperatures, which limits its stability in processes that require heat.

Thus, there is a need for a more effective and safe method for depolymerization of polysiloxanes, silicone oils, adhesive formulations, and end-of-life waste silicone products. Said method should provide components/intermediates/products, which can be reused for the straightforward preparation of organopolysiloxanes. Additionally, the reagents as well as the process should be easy to handle and economically as well as ecologically attractive. Harsh reaction conditions and the use of dangerous, harmful, or hazardous materials should be avoided. Finally, the process should not require any special reactor design or equipment.

Therefore, it was the object of the present invention to provide a more effective and safe method for depolymerization of polysiloxanes, silicone oils, silicone adhesive formulations, and end-of-life waste silicone products, which can overcome the above-discussed drawbacks and disadvantages of reported depolymerization methods.

The present invention has achieved said objectives by providing a process for the depolymerization of at least one organopolysiloxane in accordance with claim 1. Preferred embodiments of said process are described in the depending claims.

The present invention describes a process for the depolymerization of at least one organopolysiloxane, wherein the at least one organopolysiloxane is depolymerized in the presence of
(a) at least one inorganic hydroxide;
(b) at least one ammonium salt and/or at least one phosphonium salt having a pH value of from 5.0 to 9.0; and
(c) at least one solvent.

The solution of the present invention is advantageous in several aspects:
A very effective and safe method for depolymerization of polysiloxanes, silicone oils, adhesive formulations and end-of-life waste silicone products is provided, which yields components, that can be re-used for the preparation of polysiloxanes in an easy way. The process of the invention can be implemented in a very cheap and easy manner and avoids harsh reaction conditions and use of dangerous, harmful and/or hazardous to health materials. Generally, the components to be used in the process of the present invention are cheaper than the components to be used in conventional methods; the depolymerization can be carried out at comparatively milder conditions and lower temperatures; the depolymerization of the present invention is faster than conventional methods for depolymerization and is typically completed between 4-6 h with high yield; and the method of the present invention is operationally simpler than conventional methods, especially since the used organic salt is not corrosive. The process of the invention allows for use of low amounts of cheap, stable, and non-corrosive organic ammonium or phosphonium salts and of a low amount of an inorganic hydroxide and can be carried out at very mild temperatures for a comparable short time. Finally, the process of the invention does also not require any special reactor design or equipment.

As used herein, the singular forms "a", "an" and "the" include plural referents unless the context clearly dictates otherwise.

The term "at least one," as used herein, means 1 or more, i.e., 1, 2, 3, 4, 5, 6, 7, 8, 9, or more. With reference to an ingredient, the indication refers to the type of ingredient and not to the absolute number of molecules. "At least one polymer" thus means, for example, at least one type of polymer, i.e., that one type of polymer or a mixture of several different polymers may be used. Together with the weight indication, the indication refers to all compounds of the stated type which are contained in the composition/mixture, i.e., that the composition contains no further compounds of this type besides the stated quantity of the compounds in question.

The terms "comprising", "comprises" and "comprised of" as used herein are synonymous with "including", "includes", "containing" or "contains", and are inclusive or open-ended and do not exclude additional, non-recited members, elements, or method steps. If used, the phrase "consisting of" is closed and excludes all additional elements. Further, the phrase "consisting essentially of excludes additional material elements but allows the inclusion of non-material elements that do not substantially change the nature of the invention.

When amounts, concentrations, dimensions, and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

The term "about", as used herein in connection with a numerical value, relates to a variance of ±20%, preferably ±10% of the respective value.

The words "preferred", "preferably", "desirably" and "particularly", and synonyms thereof, are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word "may" is used in a permissive sense - that is meaning to have the potential to - rather than in the mandatory sense.

As used herein, room temperature is 23°C plus or minus 2°C. As used herein, "ambient conditions" means the temperature and pressure of the surroundings in which the composition is located or in which a coating layer or the substrate of said coating layer is located.

The molecular weights given in the present text refer to number average molecular weights (Mₙ), unless otherwise stipulated. All molecular weight data refers to values obtained by gel permeation chromatography (GPC) carried out using Water 2695 HPLC equipped with 3 Polypore columns and using a RI detector at 35 °C. Stabilized Tetrahydrofuran (THF) was used as eluent at 1 mL/min flow rate. The calibration of the device was carried out using polystyrene standards.

As used herein, "polydispersity" refers to a measure of the distribution of molecular mass given in a resin sample. The polydispersity is calculated by dividing the weight average molecular weight (M_{w}) by the number average molecular weight (Mₙ).

As used herein, the term "hydrocarbyl" group refers to univalent group formed by removing a hydrogen atom from a hydrocarbon, e.g., methyl, ethyl, propyl, phenyl.

As used herein, "C₁-C₈ alkyl" group refers to a monovalent group that contains 1 to 8 carbon atoms, that is a radical of an alkane and includes linear and branched organic groups. Examples of alkyl groups include but are not limited to: methyl; ethyl; propyl; isopropyl; n-butyl; isobutyl; sec-butyl; tert-butyl; n-pentyl; n-hexyl; n-heptyl; and 2-ethylhexyl. In the present invention, such alkyl groups may be unsubstituted or may be substituted with one or more substituents such as halo, nitro, cyano, amido, amino, sulfonyl, sulfinyl, sulfanyl, sulfoxy, urea, thiourea, sulfamoyl, sulfamide and hydroxy. The halogenated derivatives of the exemplary hydrocarbon radicals listed above might, in particular, be mentioned as examples of suitable substituted alkyl groups. In general, however, a preference for unsubstituted alkyl groups containing from 1 to 6 carbon atoms (C₁-C₆ alkyl) - for example unsubstituted alkyl groups containing from 1 to 4 atoms (C₁-C₄ alkyl) - should be noted.

As used herein, the term "C₂-C₈ alkenyl" group refers to an aliphatic hydrocarbon group which contains 2 to 8 carbon atoms and at least one carbon-carbon double bond, e.g., ethenyl, propenyl, butenyl, or pentenyl and structural isomers thereof such as 1- or 2-propenyl, 1-, 2-, or 3-butenyl, etc. Alkenyl groups can be linear or branched and substituted or unsubstituted. If they are substituted, the substituents are as defined above for alkyl.

As used herein, the term "C₂-C₈ alkynyl" group refers to an aliphatic hydrocarbon group which contains 2 to 8 carbon atoms and at least one carbon-carbon triple bond, e.g., ethynyl (acetylene), propynyl, butynyl, or pentynyl and structural isomers thereof as described above. Alkynyl groups can be linear or branched and substituted or unsubstituted.

The term "C₃-C₁₀ cycloalkyl" is understood to mean a saturated, mono-, bi- or tricyclic hydrocarbon group having from 3 to 10 carbon atoms. Examples of cycloalkyl groups include: cyclopropyl; cyclobutyl; cyclopentyl; cyclohexyl; cycloheptyl; cyclooctyl; adamantane; and norbornane.

As used herein, a "C₆-C₁₈ aryl" group used alone or as part of a larger moiety - as in "aralkyl group" - refers to optionally substituted, monocyclic, bicyclic, and tricyclic ring systems in which the monocyclic ring system is aromatic or at least one of the rings in a bicyclic or tricyclic system is aromatic. The bicyclic and tricyclic ring systems include benzofused 2-3 membered carbocyclic rings. Exemplary aryl groups include: phenyl; indenyl; naphthalenyl; tetrahydronaphthyl, tetrahydroindenyl; tetrahydroanthracenyl; and anthracenyl. And a preference for phenyl groups may be noted.

As used herein, an "aralkyl" group refers to an alkyl group that is substituted with an aryl group. As example of an aralkyl group is benzyl.

The terms "C₁-C₆₀ alkylene" group and "C₁-C₂₀ alkylene" group refer respectively to divalent groups that contain from 1 to 60 of from 1 to 20 carbon atoms, that are radicals of an alkane and include linear, branched, or cyclic groups, which groups may be substituted or unsubstituted and may optionally be interrupted by at least one heteroatom.

As used herein, the term "arylene" group refers to a divalent group that is a radical of an aryl group. Suitable arylene group includes phenylene, furanylene, piperidylene, and naphthylene.

Where mentioned, the expression "contain at least one heteroatom" means that the main chain or side chain of a residue comprises at least one atom that differs from carbon atom and hydrogen. Preferably the term "heteroatom" refers to nitrogen, oxygen, silicon, sulfur, phosphorus, halogens such as chlorine (CI), bromine (Br), fluor (F). Oxygen (O) and nitrogen (N) may be mentioned as typical heteroatoms in the context of the present invention.

As used herein, the term "hydrocarbon residue" includes saturated or unsaturated hydrocarbon residues.

As used herein, the term "heterocyclic compound" refers to a saturated or unsaturated, monocyclic, bicyclic, polycyclic, or fused compound containing at least one heteroatom, preferably O, S, N, and/or P, in the ring structure.

As used herein, the term "halogen" refers to fluorine, chlorine, bromine, or iodine and correspondingly the term "halide" denotes fluoride, chloride, bromide, or iodide anions.

As used herein the term "pH value" (the pH value of an aqueous solution or dispersion in water) represents the negative log₁₀ aqueous hydronium ion concentration [H₃O]⁺ and is electrometrically determined with a pH meter equipped with an appropriate electrode system in accordance with OECD guideline (no. 122) "Determination of pH. Acidity and Alkalinity", using a concentration of 0.026 M solution of Tetraalkylammonium salt.

The present invention is directed to a process for the depolymerization of at least one organopolysiloxane, wherein the at least one organopolysiloxane is depolymerized in the presence of
(a) at least one inorganic hydroxide;
(b) at least one ammonium salt and/or at least one phosphonium salt having a pH value of from 5.0 to 9.0; and
(c) at least one solvent.

In principle, the inorganic hydroxide can be selected freely, especially in view of particular objectives to be met. However, at least one inorganic hydroxide is preferably selected from the group consisting of metal hydroxide, wherein alkali hydroxides, especially sodium hydroxide and potassium hydroxide and in particular potassium hydroxide is favored.

The ammonium salt and/or phosphonium salt having a pH value of from 5.0 to 9.0 can also be selected freely, especially in view of particular objectives to be met. According to preferred embodiments of the invention, the ammonium salt and/or phosphonium salt has a pH value of from 5.5 to 8.0, more preferably 6.0 to 8.0.

The pH value of ammonium salt or phosphonium salt can be measured according to OECD guideline (no 122) "Determination of pH, Acidity and Alkalinity" using a concentration of 0.026 M solution of Tetraalkylammonium salt.

By using a less corrosive ammonium salt and/or phosphonium salt which have a pH value of from 5.0 to 9.0, it is possible to minimize harsh reaction conditions and use of harmful and/or hazardous to health materials and the depolymerization can be carried out at comparatively milder conditions and lower temperatures.

At least one ammonium salt and/or phosphonium salt is preferably selected from the group consisting of tetraalkylammonium compounds.

According to a particular preferred embodiment of the invention, quaternary ammonium compounds of the type [NY₄]⁺X⁻ are used, wherein Y is alkyl, more preferably methyl, ethyl, propyl, iso-propyl, n-butyl, sec. butyl, tert. butyl, especially n-butyl, X is chlorine, bromine, iodine, nitrate, or hydrogen sulfate, preferably chlorine, bromine, or iodine, more preferably chlorine or bromine, in particular bromine.

According to another particular preferred embodiment of the invention, benzyl trimethyl ammonium salts, preferably from quaternary ammonium compounds of the type [H₅C₆-CH₂-NY₃]⁺X⁻ are used, wherein Y is alkyl, more preferably methyl, ethyl, propyl, iso-propyl, n-butyl, sec. butyl, tert. butyl, especially n-butyl, X is chlorine, bromine, iodine, nitrate, or hydrogen sulfate, preferably chlorine, bromine, or iodine, more preferably chlorine or bromine, in particular bromine.

According to a further particular preferred embodiment of the invention, phosphonium salts, preferably from the type [PY₄]⁺X⁻ are used, wherein Y is alkyl, more preferably methyl, ethyl, propyl, iso-propyl, n-butyl, sec. butyl, tert. butyl, especially n-butyl, X is chlorine, bromine, iodine, nitrate, or hydrogen sulfate, preferably chlorine, bromine, or iodine, more preferably chlorine or bromine, in particular bromine.

The solvent can also be selected freely, especially in view of particular objectives to be met. However, at least one solvent is preferably selected from the group consisting of alkanes, alkenes, alkynes, alcohols, benzene, and aromatics optionally with aliphatic and/or aromatic substituents, carboxylic acid esters, ethers, tetra alkyl silane, carbon disulfide, halogenated hydrocarbons and perfluorinated hydrocarbons. At least one solvent is preferably selected from the group consisting of n-pentane, n-hexane, n-heptane, n-octane, cyclopentane, n-nonane, n-decane, n-dodecane, cyclohexane, hex-1-ene, cis/trans decaline, cyclohexene, 1,4-dioxane, carbon tetrachloride, p-xylene, benzene, toluene, styrene, pertetrachloroethene, carbon disulfide, tetraline, thiophene, furane, trichlorethene, diethyl ether, anisol, chloroform, chlorobenzene, aniline, 1,1,1-trichloroethane, triethylene glycol dimethyl ether, tetrahydrofuran, benzo[b]pyridine, dichloromethane, pyridine, acetaldehyde, ethylacetate, acetic acid, dichloromethane, n-butanol and isopropanol; especially from toluene, tetrahydrofuran and isopropanol. According to a particularly preferred embodiment, the solvent is selected from toluene or tetrahydrofuran.

According to a preferred embodiment of the invention, the solvent comprises from 0 to 20 wt.%, more preferably from 0 to 10 wt.%, even more preferably from 0 to 5 wt.% of water based on the total weight of said at least one organopolysiloxane, said at least one inorganic hydroxide, said at least one ammonium salt and/or said at least one phosphonium salt, and said at least one solvent. Higher water content results in reduced yields. In addition, use of less polar solvent compared to water increases solubility of the starting materials including organopolysiloxane and catalyst as well as reaction products including cyclic siloxanes.

According to a preferred embodiment of the invention, at least one solvent has a relative dielectric constant (k), measured at 20°C, of within the range of from 1 to 25, more preferably from 2 to 20.

The relative dielectric constant (k) is defined as the ratio of the permittivity of the substance (ε) to the permittivity of free space (ε₀). It can be written as k=ε/ε₀. ε₀=8.854187817 A*s/(V*m). The relative dielectric constant k is a unitless, dimensionless quantity because it is the ratio of two like entities. In the parallel plate method the material under test is placed between two electrodes forming a capacitor and the capacitance are then measured. Using the measured capacitance and the thickness of the sample the relative dielectric constant is determined.

Particularly preferred solvents for the present invention include n-pentane (1.844), n-hexane (1.89), n-heptane (1.942), n-octane (1.962), cyclopentane (1.965), n-nonane (1.972), n-decane (1.991), n-dodecane (2.01), cyclohexane (2.023), hex-1-ene (2.06), cis/trans decaline (2.11), cyclohexene (2.22), 1,4-dioxane (2.24), carbon tetrachloride (2.242), p-xylene (2.269), benzene (2.284), toluene (2.385), styrene (2.431), pertetrachloroethene (2.5), carbon disulfide (2.63), tetraline (2.66), thiophene (2.76), furane (2.95), trichlorethene (3.4), diethyl ether (4.34), anisol (4.5), chloroform (4.806), chlorobenzene (5.641), aniline (7.07), 1,1,1-trichloroethane (7.2), triethylene glycol dimethyl ether (7.5), tetrahydrofuran (7.52), benzo[b]pyridine (8.8), dichloromethane (9.08), pyridine (13.23), acetaldehyde (14.8), ethylacetate (6.0), acetic acid (6.2), tetrahydrofuran (THF) (7.5), dichloromethane (9.1), n-butanol (18), isopropanol (IPA) (18), wherein the relative dielectric constant (k) of said solvents, determined at 20°C, is indicated in brackets.

In the present invention, the depolymerization of various types of silicone polymers can be achieved by treatment of the polymeric material with a catalytic amount of a mixture comprising at least one inorganic hydroxide and at least one ammonium salt and/or at least one phosphonium salt in at least one solvent.

The depolymerization is preferably carried out at a temperature within the range of 15°C to 150°C, preferably within the range of 50°C to 120 °C, more preferably within the range of 70°C to 80°C.

According to a preferred embodiment of the invention, the time of the depolymerization is within the range of from 0.1 h to 48 h, preferably within the range of from 0.5 h to 24 h, more preferably within the range of from 4 h to 6 h.

According to a preferred embodiment of the invention, the organopolysiloxane which is depolymerized by the process of the invention has unit formula (I)

(R¹₃₋ₓR²ₓSiO_{1/2})ₐ(R¹_{2-y}R²_{y}SiO_{2/2})_{b}(R¹_{1-z}R²_{z}SiO_{3/2})_{c}(SiO_{4/2})_{d} (I)

wherein each R¹ is independently selected from the group consisting of substituted or unsubstituted hydrocarbyl groups, which may be optionally interrupted by at least one heteroatom, a hydroxy group, hydrogen, and hydrolysable groups; each R² is independently selected from aliphatically unsaturated groups; x has a value from 0 to 3, y has a value from 0 to 2, and z has a value from 0 to 1; subscripts a, b, c and d represent mole fractions of each unit in the unit formula, and subscripts a, b, c, and d have values such that preferably 0<a≤0.3, preferably 0.4≤b<1, preferably 0≤c≤0.2 and preferably 0≤d≤0.3, with the proviso that a+b+c+d=1.

Organopolysiloxane polymers generally comprise the monofunctional (M) siloxy units (i.e., the (R¹₃₋ₓR²ₓSiO_{1/2}) siloxy units), difunctional (D) siloxy units (i.e., the (R¹_{2-y}R²_{y}SiO_{2/2}) siloxy units), trifunctional (T) siloxy units (i.e., the (R¹_{1-z}R²_{z}SiO_{3/2}) siloxy units), and quadrifunctional (Q) siloxy units (i.e., the (SiO_{4/2}) siloxy units). Although if the organopolysiloxane polymer includes at least one Q siloxy unit, the organopolysiloxane polymer is considered a silicone polymer by one of skill in the art, rather than a silicone resin, due to the degree of polymerization (DP) in the organopolysiloxane polymer and the molar fraction of Q siloxy units present therein.

The unit formula of the organopolysiloxane polymer is representative of the average formula of the M, D, T and Q siloxy units. For example, the M siloxy units may be independently selected within the formula (R¹₃₋ₓR²ₓSiO_{1/2}), and the D siloxy units may be independently selected within the formula (R¹_{2-y}R²_{y}SiO_{2/2}). The subscripts, or mole fractions of the M, D, T and Q siloxy units in the organopolysiloxane polymer, are collective based on all M siloxy units, all D siloxy units, all T siloxy units, and all Q siloxy units, respectively. By way of example, the organopolysiloxane polymer may include M units corresponding to (R¹₃SiO_{1/2}), (R¹₂R²SiO_{1/2}), (R¹R²₂SiO_{1/2}), and/or (R²₃SiO_{1/2}), depending on whether subscript x is 0, 1, 2 or 3. Similarly, the organopolysiloxane polymer may include D units corresponding to (R¹₂SiO_{2/2}), (R¹R²SiO_{2/2}), and/or (R²₂SiO_{2/2}), depending on whether subscript y is 0, 1 or 2.Finally, the T units may be selected from the group consisting of (R¹₁SiO_{3/2}) and (R²SiO_{3/2}) and a combination thereof.

Each R¹ is independently selected from the group consisting of substituted or unsubstituted hydrocarbyl groups, which may be optionally interrupted by at least one heteroatom, a hydroxy group, hydrogen, and hydrolysable groups. The hydrolysable groups are preferably selected from alkoxy groups, acetate groups, lactate groups, or oximino groups. Each R¹ independently may be linear, branched, cyclic, or combinations thereof. Cyclic hydrocarbyl groups encompass aryl groups as well as saturated or nonconjugated cyclic groups. Aryl groups may be monocyclic or polycyclic. One example of a combination of a linear and cyclic hydrocarbyl group is an aralkyl group. By "substituted", it is meant that one or more hydrogen atoms may be replaced with atoms other than hydrogen (e.g., a halogen atom, such as chlorine, fluorine, or bromine) , or a carbon atom within the chain of R¹ may be replaced with an atom other than carbon, i.e., R¹ may include one or more heteroatoms within the chain, such as oxygen, sulfur, nitrogen, or phosphorus. Hydrocarbyl groups may be exemplified by methyl, ethyl, n-propyl, isopropyl, n-butyl, isobutyl, sec-butyl, t-butyl, pentyl, hexyl, cyclohexyl, heptyl, octyl, nonyl, decyl, or a similar alkyl group; phenyl, tolyl, xylyl, naphthyl, or a similar aryl group; a benzyl, phenethyl, or a similar aralkyl group; and 3-chloropropyl, 2-bromoethyl, 3, 3, 3-trifluoropropyl, or a similar substituted (e.g., halogenated) alkyl group. When R¹ is not an aryl group, each R¹ is typically saturated and not an alkenyl or alkynyl group.

In preferred embodiments, each R¹ may be independently selected from the group consisting of alkyl groups, aryl groups, a hydroxy group, hydrogen, and hydrolysable groups, more preferably, from the group consisting of alkyl groups, aryl groups, a hydroxy group, hydrogen, alkoxy groups, acetate groups, lactate groups, and oximino groups.

In more preferred embodiments, each R¹ is independently selected from the group consisting of alkyl groups, aryl groups, a hydroxy group, hydrogen, acetate groups, and alkoxy groups, more preferably, from the group consisting of methyl, ethyl, n-propyl, isopropyl, n-butyl, sec-butyl, isobutyl, t-butyl, pentyl, hexyl, cyclohexyl, benzyl, phenyl, hydroxy, hydrogen, acetate groups, methoxy group, ethoxy group, n-propoxy group, isopropoxy group, n-butoxy group, isobutoxy group, sec-butoxy group, and t-butoxy group.

In particularly preferred embodiments, each R¹ is independently selected from the group consisting of methyl, ethyl, propyl, isopropyl, benzyl, phenyl, hydroxy, hydrogen, acetate groups, methoxy group, ethoxy group, n-propoxy group, and isopropoxy group.

Each R² is independently selected from aliphatically unsaturated groups, which may alternatively be referred to as ethylenic unsaturation. The ethylenic unsaturation in R² may be terminal. Each R² may be independently selected from the group consisting of an alkenyl group and an alkynyl group. "Alkenyl" means an acyclic, branched or unbranched, monovalent hydrocarbon group having one or more carbon-carbon double bonds. Alkenyl groups may have 2 to 30 carbon atoms, alternatively 2 to 24 carbon atoms, alternatively 2 to 20 carbon atoms, alternatively 2 to 12 carbon atoms, alternatively 2 to 10 carbon atoms, and alternatively 2 to 6 carbon atoms. Specific examples thereof include vinyl groups, allyl groups, and hexenyl groups. "Alkynyl" means an acyclic, branched or unbranched, monovalent hydrocarbon group having one or more carbon-carbon triple bonds. Alkynyl groups may have 2 to 30 carbon atoms, alternatively 2 to 24 carbon atoms, alternatively 2 to 20 carbon atoms, alternatively 2 to 12 carbon atoms, alternatively 2 to 10 carbon atoms, and alternatively 2 to 6 carbon atoms. Specific examples thereof include ethynyl, propynyl, and butynyl groups. Various examples of R² include CH₂=CH-, CH₂=CHCH₂-, CH₂=CH(CH₂)₄-, CH₂=C(CH₃)CH₂-H₂C=C(CH₃)-, H₂C=C(CH₃)-, H₂C=C(CH₃)CH₂-H₂C=CHCH₂CH₂-, H₂C=CHCH₂CH₂CH₂-, HC≡C-, HC≡CCH₂-, HC≡CCH(CH₃)-, HC≡CC(CH₃)₂-, and HC≡CC(CH₃)₂CH₂-. Alternatively, each R² may be an alkenyl group. Alternatively, each R² may be independently selected from the group consisting of vinyl, allyl, and hexenyl; alternatively vinyl and hexenyl. Preferably, each R² may be a vinyl group.

According to preferred embodiments, at least one of x, y, and z are 0, more preferably x, y, and z are 0.

The organopolysiloxane polymer may have one Q siloxy unit, per molecule. Alternatively, the organopolysiloxane polymer may have two Q siloxy units, alternatively three Q siloxy units, per molecule.

The organopolysiloxane polymer may have a degree of polymerization (DP) of 5 to 400, alternatively from 10 to 200, alternatively from 14 to 160.

The organopolysiloxane polymer (A) may have a viscosity at 25°C from greater than 0 mm²/s to less than 2,500,000 mm² /s, alternatively from greater than 0 mm²/s to less than 300,000 mm²/s, alternatively from greater than 0 mm²/s to less than 60,000 mm²/s. Preferably, the organopolysiloxane polymer may have a weight-average molecular weight molecular weight (M_{W}) of from greater than 0 to 400,000 g/mol, alternatively from 1,000 g/mol to 200,000 g/mol, alternatively from 1,500 g/mol to 100,000 g/mol. The viscosity of the organopolysiloxane polymer can be measured by BROOKFIELD viscometer. M_{W} of the organopolysiloxane polymer can be determined via gel permeation chromatography employing a light-scattering detector, a refractive index detector, and a viscosity detector while employing polystyrene standards.

In certain embodiments, one organopolysiloxane polymer is depolymerized. Alternatively, a combination of two or more different organopolysiloxane polymers can be depolymerized. Methods of preparing organopolysiloxane polymers are known in the art, for example, as described in U.S. Patent Application Publication 2002/0061998 to Cray, et al.

Preferably, at least one organopolysiloxane to be depolymerized is a homopolymer or a copolymer and preferably comprises more than 50 wt.-%, more preferably more than 60 wt.%, even more preferably more than 75 wt.%, most preferably more than 90 wt.%, of poly alkyl siloxane-repeating units, more preferably of poly C₁-C₄ alkyl siloxane-repeating units, especially of poly methyl siloxane-repeating units.

Cured organopolysiloxane may also be depolymerized by the method of the present invention, wherein use of temperature above 50°C, in particular of above 70°C has proven of particular advantage in that context.

The ratio of the at least one inorganic hydroxide to the at least one organopolysiloxane to be depolymerized is preferably selected within the range of from 0.1 parts by weight to 10.0 parts by weight, most preferably within the range from 0.8 parts by weight to 4.0 parts by weight, per 100 parts by weight of the at least one organopolysiloxane to be depolymerized.

The ratio of the at least one ammonium salt and/or the at least one phosphonium salt to the at least one organopolysiloxane to be depolymerized is preferably selected within the range of from 0.4 parts by weight to 25.0 parts by weight, most preferably within the range from 4.3 parts by weight to 11.0 parts by weight, per 100 parts by weight of the at least one organopolysiloxane to be depolymerized.

The ratio of the at least one solvent to the at least one organopolysiloxane to be depolymerized is preferably selected within the range of from 50.0 parts by weight to 2000.0 parts by weight, most preferably within the range from 400.0 parts by weight to 1000.0 parts by weight, per 100 parts by weight of the at least one organopolysiloxane to be depolymerized.

The depolymerization of at least one organopolysiloxane is preferably carried out in the presence of 0.1 to 10.0 parts by weight of at least one inorganic hydroxide, 0.4 to 25.0 parts by weight of at least one ammonium salt and/or said at least one phosphonium salt; and 50.0 to 2000.0 parts by weight of at least one solvent, per 100 parts by weight of the at least one organopolysiloxane to be depolymerized.

According to a preferred embodiment, the molar ratio between said at least one inorganic hydroxide and said at least one ammonium salt and/or phosphonium salt is within 0.8:1.2 to 1.0:1.2, more preferably from 0.9:1.1 to 1.1:0.9.

Preferably, at least one organopolysiloxane is depolymerized into a composition comprising at least one cyclic siloxane monomer, preferably selected from the group consisting of hexamethylcyclotrisiloxane (D3), octamethylcyclotetrasiloxane (D4), decamethylcyclo-pentasiloxane (D5), dodecamethylcyclohexasiloxane (D6), tetradecamethylcycloheptasiloxane (D7), more preferably selected from the group consisting of octamethylcyclotetrasiloxane, decamethylcyclopentasiloxane and dodecamethylcyclohexasiloxane, in particular selected from the group consisting of octamethylcyclotetrasiloxane and decamethylcyclopentasilioxane.

The following examples serve to illustrate the invention, but the invention is not limited thereto.

### Examples

### Example 1

1 gram of silicone oil (polydimethylsiloxane, PDMS) was placed in an oven-dried round bottom flask. 1 wt.% of the catalyst mixture (1:1 ratio of tetrabutylammonium bromide and potassium hydroxide), calculated according to the molecular weight of the monomer unit, and 5 mL of toluene as a solvent were added. The flask was closed to prevent the evaporation of the solvent. The mixture was stirred at oil bath at 80°C, for 4-6 h, filtered, and the solvent was removed under reduced pressure. The sample is submitted for quantification by ¹H, ¹³C and ²⁹Si NMR. The percentage conversion or yield of cyclic siloxanes were calculated using ²⁹Si NMR based on the starting material present or left over in the system as a standard. First integrate the starting material and normalize into one. Later integrate other product peaks and calculate the yield of the product and starting material by basic mathematical equation. A mixture of cyclic organosiloxanes was obtained: 49.6% D4, 28.7% D5 and 8.13% D6 which can be recovered by distillation.

### Example 2

1 gram of silicone oil (polydimethylsiloxane, PDMS) was placed in an oven-dried round bottom flask. 1 wt.-% of the catalyst mixture (1:1 ratio of tetrabutylammonium bromide and potassium hydroxide), calculated according to the molecular weight of the monomer unit as described in Example 1, and 5 mL of THF as a solvent were added. The reaction was performed under reflux condition to prevent the evaporation of the solvent. The mixture was stirred at oil bath at 80°C, for 4-6 h, filtered, and the solvent was removed under reduced pressure. The product composition was quantified by ¹H, ¹³C and ²⁹Si NMR. A mixture of cyclic organosiloxanes was obtained: 43.6% D4, 23.7% D5, 6.13% D6 and 1.5% D7.

### Example 3

1 gram of unfilled acetic silicone formulation was placed in an oven-dried round-bottom flask. 1 wt.-% of the catalyst mixture (1:1 ratio of tetrabutylammonium bromide and potassium hydroxide), calculated according to the molecular weight of the monomer unit as described in Example 1, and 10 mL of toluene as a solvent were added. The flask was sealed with a septum to prevent the evaporation of the solvent. The mixture was stirred in oil bath at 80 °C, for 4-8 h and filtered. The filtrate is washed with water and pentane. Then the solvent was removed under reduced pressure. The product composition was quantified by ¹H, ¹³C and ²⁹Si NMR. The filler could be recovered by washing with a solvent and drying. A mixture of cyclic organosiloxanes was obtained: 59.33% D4, 29.25% D5 and 4.4% D6.

### Example 4

1 gram of silicone oil (polydimethylsiloxane, PDMS) was placed in an oven-dried round bottom flask. 1 wt.% of the catalyst mixture (1:1 ratio of tetrabutylammonium bromide and potassium hydroxide), calculated according to the molecular weight of the monomer unit as described in Example1. To the system mixture of 5 mL of toluene and 10 wt% of distilled water were added. The flask was closed to prevent the evaporation of the solvent. The mixture was stirred at oil bath at 80°C, for 4-6 h, filtered, and the solvent was removed under reduced pressure. The product composition was quantified by ¹H, ¹³C and ²⁹Si NMR. A mixture of cyclic organosiloxanes was obtained: 34.73% D4, 23.51% D5, and 4.91% D6.

In all the examples, the relative yield of the cyclic products is reported, as compared to the starting silicone containing material. The yield was calculated by comparing the peak areas in the corresponding ²⁹Si-NMR spectra.

## Claims

1. Process for the depolymerization of at least one organopolysiloxane, wherein the at least one organopolysiloxane is depolymerized in the presence of
(a) at least one inorganic hydroxide;
(b) at least one ammonium salt and/or at least one phosphonium salt having a pH value of from 5.0 to 9.0; and
(c) at least one solvent.

2. Process according to claim 1, wherein the at least one ammonium salt and/or at least one phosphonium salt has a pH value of from 5.5 to 8.0, preferably 6.0 to 8.0.

3. Process according to claim 1 or 2, wherein the at least one solvent comprises from 0 to 20 wt%, preferably from 0 to 10 wt%, more preferably from 0 to 5 wt% of water based on the total weight of said at least one organopolysiloxane, said at least one inorganic hydroxide, said at least one ammonium salt and/or said at least one phosphonium salt, and said at least one solvent.

4. Process according to at least one of the preceding claims, wherein the organopolysiloxane has unit formula (I)
(R¹₃₋ₓR²ₓSiO_{1/2})ₐ(R¹_{2-y}R²_{y}SiO_{2/2})_{b}(R¹_{1-z}R²_{z}SiO_{3/2})_{c}(SiO_{4/2})_{d} (I)
wherein each R¹ is independently selected from the group consisting of substituted or unsubstituted hydrocarbyl groups, which may be optionally interrupted by at least one heteroatom, a hydroxy group, hydrogen, and hydrolysable groups; each R² is independently selected from aliphatically unsaturated groups; x has a value from 0 to 3, y has a value from 0 to 2, and z has a value from 0 to 1; subscripts a, b, c and d represent mole fractions of each unit in the unit formula, and subscripts a, b, c, and d have values such that preferably 0<a≤0.3, preferably 0.4≤b<1, preferably 0≤c≤0.2 and preferably 0≤d≤0.3, with the proviso that a+b+c+d=1.

5. Process according to at least one of the preceding claims, wherein the at least one inorganic hydroxide is selected from the group consisting of metal hydroxides, especially alkali hydroxides, preferably from sodium hydroxide and potassium hydroxide, more preferably from potassium hydroxide.

6. Process according to at least one of the preceding claims, wherein the at least one ammonium salt and/or phosphonium salt is selected from the group consisting of tetraalkylammonium compounds, preferably from quaternary ammonium compounds of type [NY₄]⁺X⁻, benzyl trimethyl ammonium salts, preferably from quaternary ammonium compounds of the type [H₅C₆-CH₂-NY₃]⁺X⁻, and phosphonium salts, preferably from quaternary phosphonium compounds of the type [PY₄]⁺X⁻, wherein Y is alkyl, more preferably methyl, ethyl, propyl, iso-propyl, n-butyl, sec. butyl, tert. butyl, especially n-butyl, X is chlorine, bromine, iodine, nitrate, or hydrogen sulfate, preferably chlorine, bromine, or iodine, more preferably chlorine or bromine, in particular bromine.

7. Process according to at least one of the preceding claims, wherein the at least one solvent is selected from the group consisting of alkanes, alkenes, alkynes, alcohols, benzene, and aromatics optionally with aliphatic and/or aromatic substituents, carboxylic acid esters, ethers, tetra alkyl silane, carbon disulfide, halogenated hydrocarbons and perfluorinated hydrocarbons.

8. Process according to at least one of the preceding claims, wherein at least one solvent has a relative dielectric constant (k), measured at 20°C, of within the range of from 1 to 25, more preferably from 2 to 20.

9. Process according to at least one of the preceding claims, wherein at least one solvent is selected from the group consisting of n-pentane, n-hexane, n-heptane, n-octane, cyclopentane, n-nonane, n-decane, n-dodecane, cyclohexane, hex-1-ene, cis/trans decaline, cyclohexene, 1,4-dioxane, carbon tetrachloride, p-xylene, benzene, toluene, styrene, pertetrachloroethene, carbon disulfide, tetraline, thiophene, furane, trichlorethene, diethyl ether, anisol, chloroform, chlorobenzene, aniline, 1,1,1-trichloroethane, triethylene glycol dimethyl ether, tetrahydrofuran, benzo[b]pyridine, dichloromethane, pyridine, acetaldehyde, ethylacetate, acetic acid, dichloromethane, n-butanol and isopropanol; especially from toluene, tetrahydrofuran and isopropanol.

10. Process according to at least one of the preceding claims, wherein the depolymerization is carried out at a temperature within the range of 15°C to 150°C, preferably within the range of 50°C to 120 °C, more preferably within the range of 70°C to 80°C.

11. Process according to at least one of the preceding claims, wherein the ratio of the at least one inorganic hydroxide to the at least one organopolysiloxane to be depolymerized is selected within the range of from 0.1 parts by weight to 10.0 parts by weight, most preferably within the range from 0.8 parts by weight to 4.0 parts by weight, per 100 parts by weight of the at least one organopolysiloxane to be depolymerized.

12. Process according to at least one of the preceding claims, wherein the ratio of the at least one ammonium salt and/or the at least one phosphonium salt to the at least one organopolysiloxane to be depolymerized is selected within the range of from 0.4 parts by weight to 25.0 parts by weight, most preferably within the range from 4.3 parts by weight to 11.0 parts by weight, per 100 parts by weight of the at least one organopolysiloxane to be depolymerized.

13. Process according to at least one of the preceding claims, wherein the ratio of the at least one solvent to the at least one organopolysiloxane to be depolymerized is selected within the range of from 50.0 parts by weight to 2000.0 parts by weight, most preferably within the range from 400.0 parts by weight to 1000.0 parts by weight, per 100 parts by weight of the at least one organopolysiloxane to be depolymerized.

14. Process according to at least one of the preceding claims, wherein the depolymerization of at least one organopolysiloxane is carried out in the presence of 0.1 to 10.0 parts by weight of at least one inorganic hydroxide, 0.4 to 25.0 parts by weight of at least one ammonium salt and/or said at least one phosphonium salt; and 50.0 to 2000.0 parts by weight of at least one solvent, per 100 parts by weight of the at least one organopolysiloxane to be depolymerized.

15. Process according to at least one of the preceding claims, wherein the at least one organopolysiloxane is depolymerized into a composition comprising at least one cyclic siloxane, preferably selected from the group consisting of hexamethylcyclotrisiloxane, octamethylcyclotetrasiloxane, decamethylcyclo-pentasiloxane and dodecamethylcyclohexasiloxane, more preferably selected from the group consisting of octamethylcyclotetrasiloxane, decamethylcyclopentasiloxane and dodecamethylcyclohexasiloxane, in particular selected from the group consisting of octamethylcyclotetrasiloxane and decamethylcyclopentasilioxane.
